(19) 

Europäisches
Patentamt
European
Patent Office
Office européen
des brevets

(11) **EP 2 311 256 B1**

(12) **EUROPEAN PATENT SPECIFICATION**

(45) Date of publication and mention
of the grant of the patent:
**18.01.2012 Bulletin 2012/03**

(51) Int Cl.:
***H04N 7/14*** *(2006.01)*  ***H04N 5/262*** *(2006.01)*

(21) Application number: **09786752.7**

(22) Date of filing: **30.07.2009**

(86) International application number:
**PCT/IB2009/053312**

(87) International publication number:
**WO 2010/015970 (11.02.2010 Gazette 2010/06)**

(54) **COMMUNICATION DEVICE WITH PERIPHERAL VIEWING MEANS**

KOMMUNIKATIONSVORRICHTUNG MIT PERIPHERIEANZEIGEMITTEL

DISPOSITIF DE COMMUNICATION À MOYEN DE VISUALISATION PÉRIPHÉRIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.08.2008 EP 08300252**

(43) Date of publication of application:
**20.04.2011 Bulletin 2011/16**

(73) Proprietor: **Koninklijke Philips Electronics N.V.
5621 BA Eindhoven (NL)**

(72) Inventor: **BELT, Harm, J., W.
NL-5656 AE Eindhoven (NL)**

(74) Representative: **Coops, Peter
Philips
Intellectual Property & Standards
P.O. Box 220
5600 AE Eindhoven (NL)**

(56) References cited:
**WO-A1-00/02388      WO-A1-01/30079
WO-A1-94/17636      WO-A1-96/31984
WO-A2-01/39498      US-B1- 6 977 676**

• TAKANO T ET AL: "Intruder detection system by
image processing" 12 October 1994 (1994-10-12),
SECURITY TECHNOLOGY, 1993 SECURITY
TECHNOLOGY, PROCEEDINGS, INSTITUTE OF
ELECTRICAL AND ELECTRONICS ENGINEERS
1993 INTERNATIONAL CARNAHAN CO
NFERENCE ON OTTAWA, ONT., CANADA 13-15
OCT. 1993, NEW YORK, NY, USA,IEEE, PAGE(S)
31 - 33 , XP010146536 the whole document

**Description**

**FIELD OF THE INVENTION**

The present invention relates a transmitting communication device comprising a camera for capturing an image sequence with a display range and a transmitting unit for transmitting the captured image sequence to a receiving communication device.

The present invention also relates to a receiving communication device comprising a receiving unit for receiving from a transmitting communication device through a communication network, video data corresponding to an image sequence to be displayed with a display range, and a display for displaying the video data.

This invention is, for example, relevant for video telephony and video conferencing systems.

**BACKGROUND OF THE INVENTION**

With the growing amount of people having access to broadband internet, Voice Over Internet Protocol (VoIP) applications are used more and more. Also internet video telephony is coming, now that bandwidth limitations are decreasing.

Much research in the world focuses on improving the audiovisual quality of video telephony by signal processing means.

**SUMMARY OF THE INVENTION**

It is an object of the invention to propose a communication device which increases the user experience.

As a matter of fact, the invention is based on the following observations. With conventional video telephony and conferencing systems the image reproduction is limited to the used display itself. Naturally, the display is the location where people at the near-end location of the communication will look when they want to see what goes on at the far-end location. In this situation the central part (in space) of the human visual system is stimulated, there where the eye has a high sensitivity for spatial detail. In normal face-to-face communication, when people "are really there", not only the central part of the human visual system but also the peripheral part of the visual system is stimulated. In the peripheral regions the human visual system is not very sensitive for spatial detail, but it has a high sensitivity for temporal detail (moving objects). This means that people can quickly spot from the corner of their eyes when someone is moving. Visual information that stimulates people's peripheral viewing is not at all used in current-state video conferencing and video telephony systems, while it could add to the sense of "being there". With proper peripheral viewing you could spot someone who enters the room at the far-end location at the left or right side, even though that person is located outside the limited viewing range of the display. The fact that the peripheral viewing senses of humans is not exploited in video telephony or video conferencing is an issue which to the knowledge of the author of this invention has not yet been addressed. Solving this issue means improving on the sense of being there, which is the goal of the invention.

To this end, there is provided a transmitting communication device comprising a camera for capturing an image sequence with a display range; a sensor for capturing environmental events that are not perceptible within the display range, a processor for computing a control signal from the environmental events, and a transmitting unit for transmitting the captured image sequence and the control signal to a receiving communication device.

There is also provided a corresponding receiving communication device comprising a receiving unit for receiving separately, from a transmitting communication device through a communication network, video data corresponding to an image sequence to be displayed with a display range and a control signal representative of environmental events not perceptible within the display range; a display for displaying the video data; light sources next to the display; and a controller for interpreting the control signal so as to derive the environmental events and for controlling the light sources in dependence on the control signal.

The invention makes it possible to stimulate people's peripheral viewing senses in video telephony and video conferencing systems by extension of the displayed visual information to the region outside the display. With the invention it is possible to spot events at the far-end location that happen outside the visible image shown on your screen. This provides with an enhanced sense of "being there".

According to a first embodiment of the invention, the sensor is a wide-angle camera and the control signal is computed from an image sequence captured by the wide-angle camera outside the display the range. Beneficially, the processor comprises means for detecting the face or faces of people within a viewing range of the camera, and means for zooming around this face or these faces so as to obtain the image sequence with the display range to be transmitted to the receiving communication device. The processor may comprise means for estimating motion of an object entering into the viewing range of the wide-angle camera so as to derive a motion vector magnitude, which motion vector magnitude is included in the control signal. The processor may also comprise means for computing color information of pixels within the viewing range and outside the display range, said color information being included in the control signal.

At the receiving communication device side, the controller may be adapted to derive a motion information representative of the motion of an object outside the display range at the transmitting communication device side and a position of the object relative to the display so as to switch on the corresponding light source. The controller may be adapted to derive a motion vector magnitude representative of the amount of motion of an object outside the display range at the transmitting communication device side, an intensity of the light source being controlled in proportion of the motion vector magnitude. The controller may also be adapted to derive a color information representative of a position and/or motion of an object outside the display range at the transmitting communication device side, a color of the light source being controlled in dependence on the color information.

According to a second embodiment of the invention, the sensor is a microphone array arranged to detect sound outside the display range, and the control signal is computed from the microphone signals. In this case, the processor comprises means for performing acoustic source localization so as to detect a direction of a sound event, the direction of the sound event being included in the control signal.

At the receiving communication device side, the controller may be adapted to derive a magnitude of a sound emitted outside the display range at the transmitting communication device side, an intensity of the light source being controlled in proportion of the sound magnitude. The controller may also be adapted to derive a direction of a sound emitted outside the display range at the transmitting communication device side so as to switch on the light source corresponding to the direction where the sound comes from.

These and other aspects of the invention will be apparent from and will be elucidated with reference to the embodiments described hereinafter.

## BRIEF DESCRIPTION OF THE DRAWINGS

The present invention will now be described in more detail, by way of example, with reference to the accompanying drawings, wherein:

- Fig. 1 is a block diagram of a communication system in accordance with the invention;
- Fig. 2 shows a living room scene at a far-end location as seen by a camera with a wide-angle lens;
- Fig. 3A shows that a relevant part of the picture captured at the near-end location with the camera is transmitted with high video quality given a limited communication bandwidth, and Fig. 3B shows the captured picture as received and displayed at the far-end location;
- Fig. 4 shows somebody walking in the living room at the far-end location, who is within the viewing range of a wide-angle camera but outside the display range of a main camera;
- Figs 5A and 5B shows a communication system in accordance with a first embodiment of the invention. Fig. 5A shows a control signal that is derived and transmitted depending on the amount of motion detected from the person within the viewing range of a wide-angle camera at the far-end location, and Fig. 5B shows a light source that is switched on at the far-end location depending on the received control signal for the time duration at which the motion of the person lasts;
- Fig. 6 shows a wide-angle camera viewing range, a zoom or display region, and the left and right out-of-zoom regions from which motion is analyzed; and
- Figs 7A and 7B shows a communication system in accordance with a second embodiment of the invention. Fig. 7A shows a loud sound event and its direction that are detected at the near-end location using a microphone array, and Fig. 7B shows the light source that corresponds to the direction of the loud sound event which is turned on for the duration of the sound event at the far-end location.

## DETAILED DESCRIPTION OF THE INVENTION

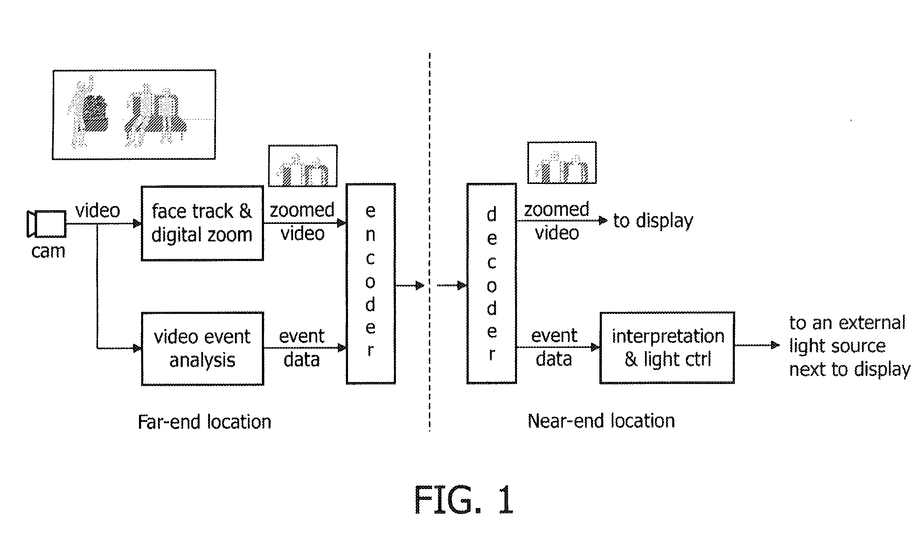

Referring to Figure 1, a communication system in accordance with the invention is depicted. The communication system comprises a local communication device at a near-end (also called receive end in the following description) location which is intended to communicate with a remote communication device at a far-end (also called transmit end) location through a communication network. The remote device comprises a camera for capturing a video signal, a processor for performing digital video processing of the video signal and analyzing and detecting video events. Digital video processing includes, for example, face tracking and digital zoom. The processed video signal and the detected data events are encoded via a video encoder and transmitted to the local device through the communication network. The local device receives and decodes the encoded video signal and data events via a video decoder. The decoded video signal is displayed on a screen of the remote device. The local device also comprises a controller for interpreting the data events and at least one light source next to the screen device which is controlled by the controller depending on the interpretation of the data events.

It is to be noted that face tracking, whereby faces looking at the camera inside the camera's field of view are detected, and digital zoom, whereby the digital zoom is controlled such that all faces looking at the camera are selected (and not much more), are already known from a person skilled in the art, and is performed for example by Philips Webcam SPC1300NC, featuring face detection and tracking with digital zoom.

It will also be apparent for a skilled person that standard solutions exist already for the video encoder and decoder, and that these solutions (like H.264 for video compression for example) provide the means for carrying some low-bit rate private data (namely the event data which is low bit rate data).

The invention can be applied in video telephony and conferencing systems when next to the display external light sources are present. The invention requires at the transmit end some intelligence to capture and transmit (as private data next to the audio and video) some low bit rate event data. The invention will now be explained through two different and non-limitative examples.

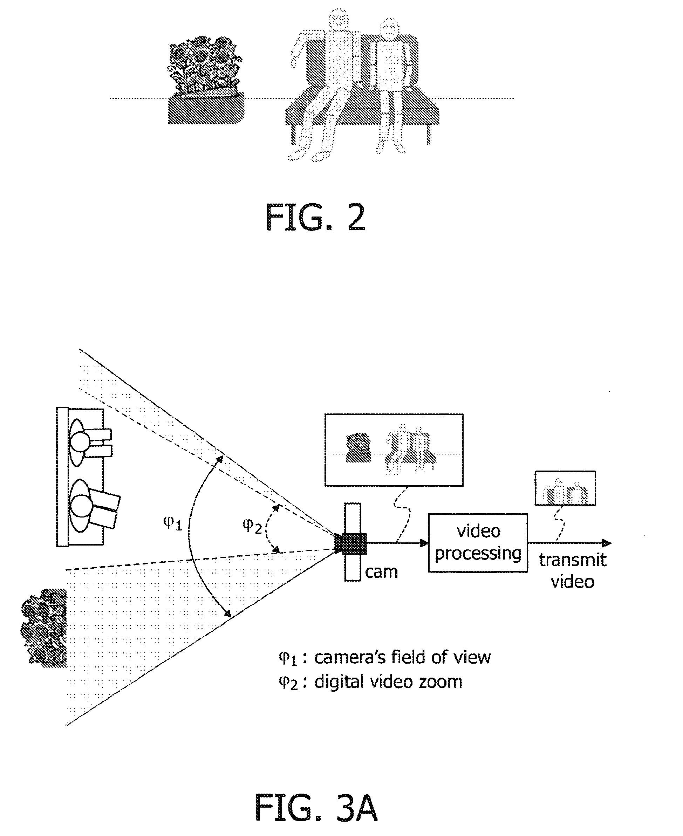

Referring to figure 2, a typical living room video telephony scene is shown as captured by the camera of a video telephony device. This end of the communication line is the far-end location. Clearly, the camera image contains more information than strictly needed for video communication (e.g. it could do without much of the wall, and without the plants).

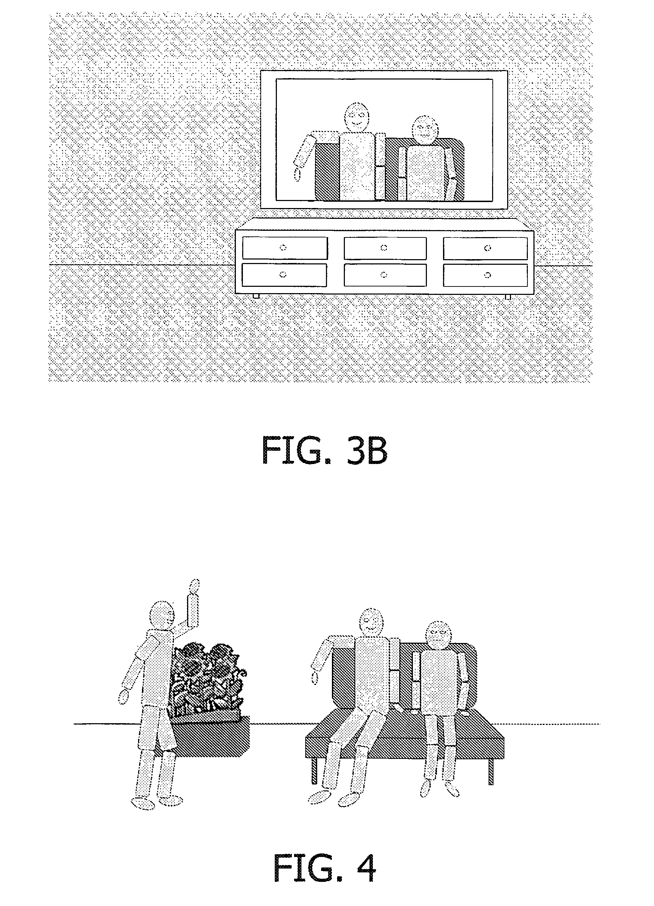

Due to the limitation of the communication bandwidth it makes sense to reduce the high-resolution camera image to a lower resolution image by video signal processing means in such a way that the faces of the people looking at the camera are left intact and the surroundings are cropped of (see Figure 3B for illustration). This feature, combined video face finding and tracking with digital zoom, is already implemented in many webcams on the market as mentioned before. The advantage for the user(s) in the near-end room is that they can better see the facial features of their conversation partners (for example their lips, face expressions, or eyes). This is very important for a high quality communication between people. For video face finding the algorithm developed by Viola and Jones can be used. This algorithm is depicted in "Robust Real-time Object Detection", in Proceeding of the Second International Workshop on Statistical and Computational Theories of Vision - Modeling, Learning, Computing, and Sampling", Vancouver, Canada, July 13, 2001. It is also described in "Rapid Object Detection using a Boosted Cascade of Simple Features", in Proc. IEEE Computer Society Conference on Computer Vision and Pattern Recognition (CVPR), vol. I, pp. 511-518, 2001. The Viola and Jones detector is trained to only find a face in an image when that face looks more or less in the direction of the camera. As a consequence, a digital zoom only zooms on people that participate in the call in order to bring across the facial expressions of those people maximally well (it is assumed that someone participates to the call when his/her face looks towards the camera). For the digital zoom, a rectangular zoom area is centered around the found face locations, ignoring the pixels outside the zoom area, and, when needed, scaling the resulting image to the transmit resolution using a pixel interpolation method like, for example, bi-linear interpolation.

Figure 3A shows a transmitting communication device in accordance with the invention. It comprises a camera having wide angle lens and a video processing unit for receiving the camera output and for delivering a video to be transmitted. The wide angle lens at the far-end location covers a viewing angle $\varphi1$ (corresponding to the camera's field of view). Using video face and people detection and tracking technology a digital zoom is performed by the video processing unit, prior to transmission, so that only the important image region (where the people are) is transmitted for the highest video quality given a limited communication bandwidth. The digital video zoom corresponds to the display angle $\varphi2$. Please note that in the above example, the same camera has been used to capture the images for video processing purpose and transmission purpose. In this case, the camera has a sufficiently large viewing angle. Alternatively, the first camera used for video processing purpose can be distinct from the second camera used for transmitting images, said first camera having in this second case a much larger viewing angle than the second one.

In Figure 3B, the result of the face finding combined with digital zoom that was performed at the far-end side is seen on the screen of the receiving communication device at the near-end side. The faces of the people are well visible on the screen, which is important for the non-verbal communication cues (face expressions, eyes, lip movements).

The invention tackles the following issue. Imagine the situation shown in Figure 4 where a new person enters the room at the far-end location. This event is immediately noticed by the people present in that room. However, at the near-end location, where only the two people on the couch are visible on the display, this event is not noticed because it happens outside the image on the screen. The camera zoom is not adjusting to the new person, since that person does not look at the camera and therefore his/her face is not detected by the face detector. For example, he or she could just be walking by without having the intention to participate to the video call, and therefore zooming out to include the new person too would deteriorate the quality of the important faces. The fact that one party in the communication (namely the people at the far-end location) notices an event in the scene while the other party in the communication (namely the people at the near-end location) does not notice this event, makes that the people at the near-end location do not feel "as if they are there".

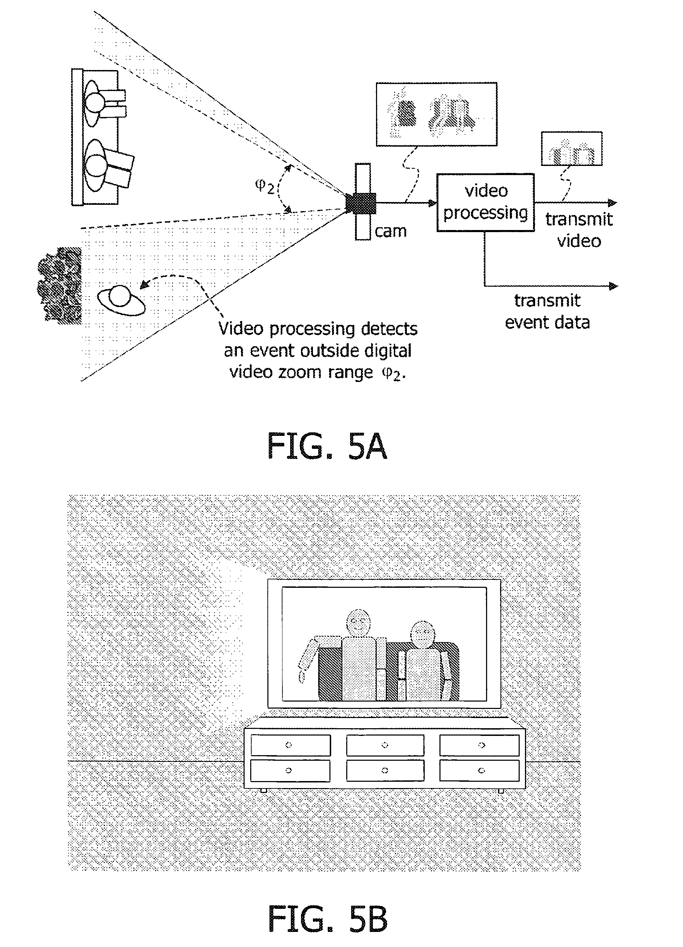

Referring to Figure 5A, the new person entering the room at the far-end location is represented. When the new person comes in the viewing range of the camera, the new person is detected by the camera at the far-end location. Depending on the amount of motion of the new person, a control signal representative of the video event data is derived by the video processing unit, which control signal is then transmitted to the near-end location by the transmitting unit (not represented) of the transmitting communication device.

As shown in Figure 5B, the receiving communication device receives the control signal representative of the event data item at the near-end location. According to a first embodiment of the invention, the receiving communication device comprises light sources next to the display for reproducing the event data item in order to make the people at the near-end location feel "as if they were there". The light sources are characterized by a low or very low spatial resolution. A light source is switched on with an intensity that corresponds to the amount of motion of the new person at the far-end location (more light when motion is larger). The light source stays switched on for the duration of time at which the motion of the new person lasts. Spatial information about the new person is also taken into account. When the new person is on the left side as viewed by the far-end camera, then the light source is switched on the left side of the display at the near-end, and vice versa.

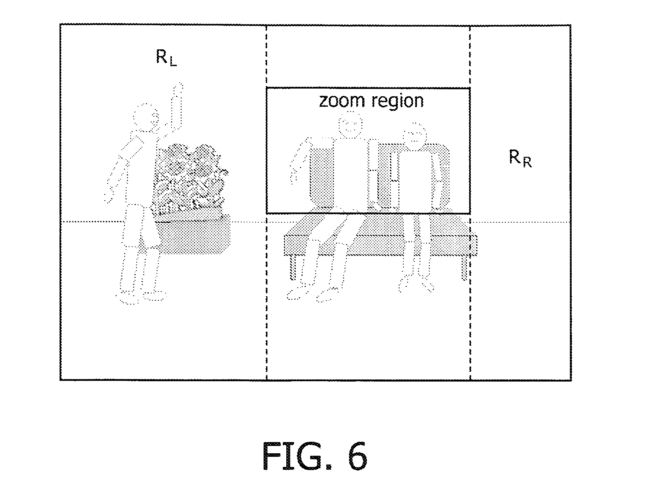

The processor of the transmitting communication device performs motion estimation on the image sequence from the wide-angle camera view. To this end, the processor uses for example a 3D recursive search (3D-RS) algorithm for motion estimation. Such an algorithm is known to a person skilled in the art and is described for example in US patent 6,996,175. Based on the 3D-RS algorithm, the processor achieves for each camera image a new motion vector field, which gives us a motion vector $v=(v_x, v_y)$ for each rectangular image block of RxC pixels (often square blocks are used with RxC =8x8 pixels). One important image region is on the left of the zoom region in the camera image, denoted by $R_L$, see Figure 6. The other important image region is on the right of the zoom region, denoted by $R_R$. The processor then computes a measure of the average motion both in region $R_L$ and in region $R_R$. This measure is for example the average motion vector magnitude in regions $R_L$ and $R_R$:

$$v_{av,L} = \frac{1}{N_L} \sum_{R_L} \sqrt{v_x^2 + v_y^2} \ , \qquad v_{av,R} = \frac{1}{N_R} \sum_{R_R} \sqrt{v_x^2 + v_y^2} \qquad (1),$$

or an approximation of the average motion vector magnitude which is easier to compute (less operations on the processor):

$$v_{av,L} = \frac{1}{N_L} \sum_{R_L} |v_x| + |v_y| \ , \qquad v_{av,R} = \frac{1}{N_R} \sum_{R_R} |v_x| + |v_y| \qquad (2).$$

Here $N_L$ and $N_R$ are the number of non-zero motion vectors in $R_L$ and $R_R$, respectively. With these equations (1) and (2), $v_{av,L}$ or $v_{av,R}$ has a large value when the moving object in either the region $R_L$ or $R_R$ is of a large size. When the moving object is small, $v_{av,L}$ or $v_{av,R}$ can still have a large value if that object moves rapidly. These average motion vector magnitudes are part of the control signal that is transmitted to the receiving communication device.

As an extension to the invention, the event data can be extended with averaged color information of the pixels in a region ($R_R$ or $R_L$). In this averaging, only those pixels are taken into account for which holds that the associated motion vector magnitude exceeds a small fixed threshold so that only the pixels that move to a sufficient extent contribute to the average color.

The control signal representative of the event data is then received by the receiving communication device. Said device includes a controller for interpreting the control signal and for controlling the light at the near-end location.

In Figure 5A, the light sources on the left and the right side of the display. It will be apparent to a skilled person that the invention is not limited to a set of two light sources. There could be more light sources, there could also be external light sources. The intensity of the light at the left side of the display is controlled by $v_{av,L}$ in such a way that there is more light for larger values of $v_{av,L}$. In more details, when $I_L$ is the intensity of the left light source, then

$$I_L = f(v_{av,L}), \qquad (3)$$

where f() is a monotonically increasing function of its argument. A similar principle is applied for the right side of the display. The intensity of a light source remains fixed according to the equation (3) up until the moment that new event data arrives. Alternatively, for more a smooth behavior of the light source, a filter operation (like linear interpolation) is applied in the time direction to the event data. To guarantee that an abrupt movement still leads to an abrupt light change, this time filter should not smooth the data when the motion makes a sudden large change, the time filter should only smooth the data when the absolute difference of subsequent average motion magnitudes is small (below a fixed threshold).

Thanks to the invention, the people at the near-end side can quickly spot a video event from the corner of their eyes outside the display range, just like the people at the far-end side can quickly spot this event. By this measure, there is an increased sense of being there for the near-end people.

For more temporal accuracy (taking into account that the corner of the human eye sees a higher temporal resolution than the center of the human eye), the generation of the event data and thus the control of the near-end light sources occurs at a higher rate than the frame rate of the transmitted video. For this the camera from which the event data is derived at the far-end location should run at a higher frame rate than the transmit frame rate.

As an extension of the invention, the event data contains average color information from the moving object, and the light source is activated with that color.

According to a second embodiment of the invention, the event data are generated from audio rather than video input at the transmit end location. A loud sound event is detected at the transmit end, and results in a sudden light flash with the light sources at the receive end. Advantageously, the people at the near-end location know immediately that the sudden sound comes from the other side and not from their own home. Also advantageously, the detection of the sudden sound event does not need to happen at the transmit end, it can also be performed on the incoming audio at the receive end where the light source is.

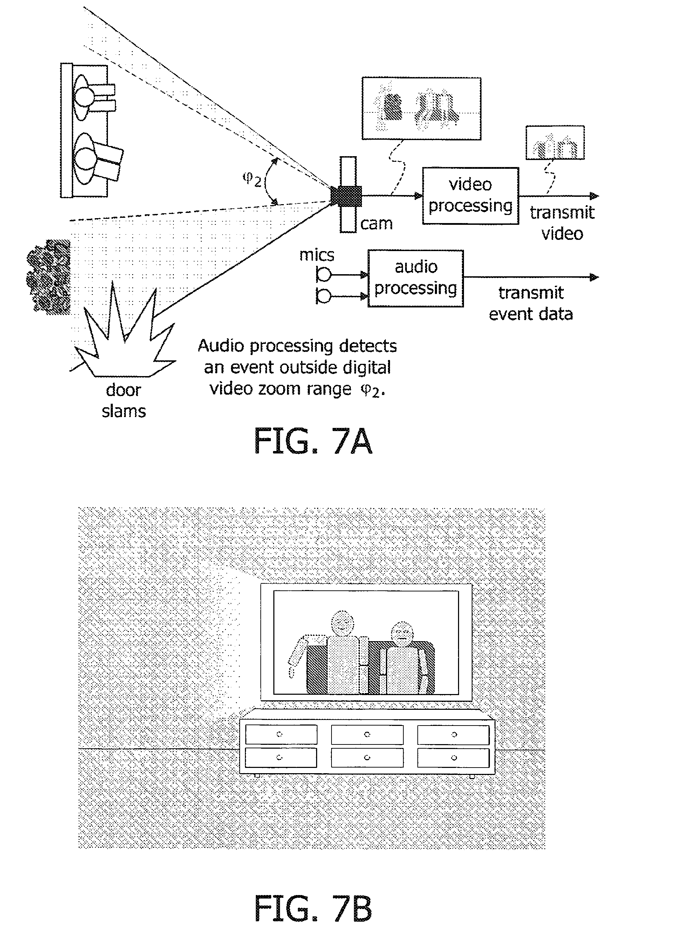

In a more refined method, the direction of the loud sound event is also detected and added to the event data at the transmit end. Then, at the receive end, the corresponding light sources turns on for the duration of the loud sound event, see Figure 7B. For this a microphone array is needed controlled with an algorithm for acoustic source localization. Such an algorithm for acoustic source localization is known from the skilled person and is depicted, for example, in US patent n° 6,774,934.

In figure 7A, a loud sound event is detected at the transmit end location, for example a door slams. The audio processor of the transmitting communication device detects this event outside the digital video zoom range φ2 corresponding to the display range at the receive end. The detected audio event data is then transmitted by the transmitting unit (not represented) of the transmitting communication device. Also the direction of the sound is measured using the microphone array. In figure 7B, at the receive end location, the light source that corresponds to the direction of the loud sound event is turned on for the duration of the sound event.

The invention may be implemented by means of hardware and/or dedicated software. A set of instructions corresponding to this software and which is loaded into a program memory causes an integrated circuit of the communication device to carry out the method in accordance with the embodiments of the invention. The set of instructions may be stored on a data carrier such as, for example, a disk. The set of instructions can be read from the data carrier so as to load it into the program memory of the integrated circuit, which will then fulfils its role. For example, the software is copied on a CD-ROM, said CD ROM being sold together with the communication device. Alternatively, the software can also be made available through the Internet. Moreover, this dedicated software may also be integrated by default in Flash memory or a Read Only Memory ROM memory of the communication device.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa.

**Claims**

1. A transmitting communication device comprising:

   - a first camera for capturing an image sequence with a display range;
   - a sensor for capturing environmental events that are not perceptible within the display range,
   - a processor for computing a control signal from the environmental events, and
   - a transmitting unit for transmitting the captured image sequence and the control signal to a receiving communication device

   wherein the sensor is a second wide-angle camera, wherein the control signal is computed from an image sequence captured by the wide-angle camera outside the display the range, and wherein the processor comprises means for estimating motion of an object entering into the viewing range of the wide-angle camera so as to derive a motion vector magnitude, which motion vector magnitude is included in the control signal.

2. A transmitting communication device as claimed in claim 1, wherein the processor comprises means for computing color information of pixels within the viewing range and outside the display range, said color information being included in the control signal.

3. A transmitting communication device as claimed in claim 1, wherein the processor comprises means for reducing the spatial or temporal resolution of the captured image sequence.

4. A receiving communication device comprising:

- a receiving unit for receiving separately, from a transmitting communication device through a communication network, video data corresponding to an image sequence to be displayed with a display range and a control signal representative of environmental events not perceptible within the display range;
- a display for displaying the video data;
- light sources next to the display; and
- a controller for interpreting the control signal so as to derive the environmental events and for controlling the light sources in dependence on the control signal.

5. A receiving communication device as claimed in claim 4, wherein the controller is adapted to derive motion information representative of the motion of an object outside the display range at the transmitting communication device side and a position of the object relative to the display so as to switch on the corresponding light source.

6. A receiving communication device as claimed in claim 4, wherein the controller is adapted to derive a motion vector magnitude representative of the amount of motion of an object outside the display range at the transmitting communication device side, an intensity of the light source being controlled in proportion of the motion vector magnitude.

7. A receiving communication device as claimed in claim 4, wherein the controller is adapted to derive color information representative of a position and/or motion of an object outside the display range at the transmitting communication device side, a color of the light source being controlled in dependence on the color information.

8. A receiving communication device as claimed in claim 4, wherein the controller is adapted to derive a magnitude of a sound emitted outside the display range at the transmitting communication device side, an intensity of the light source being controlled in proportion of the sound magnitude.

9. A receiving communication device as claimed in claim 4, wherein the controller is adapted to derive a direction of a sound emitted outside the display range at the transmitting communication device side so as to switch on the light source corresponding to the direction where the sound comes from.

**Patentansprüche**

1. Sendende Kommunikationseinrichtung, die Folgendes umfasst:

- eine erste Kamera zum Aufnehmen einer Bildfolge mit einem Wiedergabebereich;
- einen Sensor zum Aufnehmen von Umgebungsereignissen, die nicht in dem Wiedergabebereich wahrnehmbar sind,
- einen Prozessor zum Berechnen eines Steuersignals aus den Umgebungsereignissen, und
- eine Sendeeinheit zum Aussenden der aufgenommenen Bildfolge und des Steuersignals zu einer empfangenden Kommunikationseinrichtung,

wobei der Sensor eine zweite Weitwinkelkamera ist, wobei das Steuersignal aus einer von der Weitwinkelkamera außerhalb des Wiedergabebereichs aufgenommenen Bildfolge berechnet wird, und wobei der Prozessor Mittel zum Schätzen von Bewegung eines in den Sichtbereich der Weitwinkelkamera eintretenden Objekts aufweist, und zwar zum Herleiten einer in das Steuersignal eingeschlossenen Bewegungsvektorgröße.

2. Sendende Kommunikationseinrichtung nach Anspruch 1, wobei der Prozessor Mittel zum Berechnen von Farbinformation von Pixeln innerhalb des Sichtbereichs und außerhalb des Wiedergabebereichs aufweist, wobei die genannte Farbinformation in das Steuersignal eingeschlossen ist.

3. Sendende Kommunikationseinrichtung nach Anspruch 1, wobei der Prozessor Mittel zum Reduzieren der räumlichen oder zeitlichen Auflösung der aufgenommenen Bildfolge.

4. Empfangende Kommunikationseinrichtung, die Folgendes umfasst:

   - eine Empfangseinheit zum aus einer sendenden Kommunikationseinrichtung über ein Kommunikationsnetzwerk separaten Empfangen von Videodaten, die einer mit einem Wiedergabebereich wiederzugebenden Bildfolge entspricht, und eines Steuersignals, das für Umgebungsereignisse, die nicht in dem Wiedergabebereich wahrnehmbar sind, typisch ist;
   - eine Wiedergabeanordnung zum Wiedergeben der Videodaten;
   - Lichtquellen neben der Wiedergabeanordnung; und
   - einen Controller zum Interpretieren des Steuersignals zum Herleiten der Umgebungsereignissen und zum Steuern der Lichtquellen in Abhängigkeit von dem Steuersignal.

5. Empfangende Kommunikationseinrichtung nach Anspruch 4, wobei der Controller dazu vorgesehen ist, Bewegungsinformation herzuleiten, die für die Bewegung eines Objektes außerhalb des Wiedergabebereichs an der Seite der sendenden Kommunikationseinrichtung und der Lage des Objektes gegenüber der Wiedergabeanordnung typisch ist, und zwar Einschalten der entsprechenden Lichtquelle.

6. Empfangende Kommunikationseinrichtung nach Anspruch 4, wobei der Controller dazu vorgesehen ist, eine Bewegungsvektorgröße herzuleiten, die für den Umfang der Bewegung eines Objektes außerhalb des Wiedergabebereichs an der Seite der sendenden Kommunikationseinrichtung typisch ist, wobei eine Intensität der Lichtquelle im Verhältnis zu der Bewegungsvektorgröße gesteuert wird.

7. Empfangende Kommunikationseinrichtung nach Anspruch 4, wobei der Controller dazu vorgesehen ist, Farbinformation herzuleiten, die für eine Position und/oder Bewegung eines Objektes außerhalb des Wiedergabebereichs an der Seite der sendenden Kommunikationseinrichtung typisch ist, wobei eine Farbe der Lichtquelle in Abhängigkeit von der Farbinformation gesteuert wird.

8. Empfangende Kommunikationseinrichtung nach Anspruch 4, wobei der Controller dazu vorgesehen ist, eine Stärke eines außerhalb des Wiedergabebereichs an der Seite der sendenden Kommunikationseinrichtung ausgestrahlten Schalls herzuleiten, wobei eine Intensität der Lichtquelle im Verhältnis zu der Schallstärke gesteuert wird.

9. Empfangende Kommunikationseinrichtung nach Anspruch 4, wobei der Controller dazu vorgesehen ist, eine Richtung eines außerhalb des Wiedergabebereichs an der Seite der sendenden Kommunikationseinrichtung ausgestrahlten Schalls herzuleiten, damit die Lichtquelle entsprechend der Richtung, aus welcher der Schall herrührt, eingeschaltet wird.

**Revendications**

1. Dispositif de communication de transmission comprenant :

   - une première caméra pour capter une séquence d'images avec une plage d' affichage ;
   - un capteur pour capter des événements de l'environnement qui ne sont pas perceptibles dans la plage d' affichage ;
   - un processeur pour calculer un signal de commande à partir des événements de l'environnement ; et
   - une unité de transmission pour transmettre la séquence d'images captées et le signal de commande à un dispositif de communication de réception ;

   dans lequel le capteur est une seconde caméra à grand angle où le signal de commande est calculé à partir d'une séquence d'images qui sont captées par la caméra à grand angle en dehors de la plage d'affichage et dans lequel le processeur comprend des moyens pour l'estimation d'un mouvement d'un objet qui entre dans la plage de vision de la caméra à grand angle de manière à dériver une grandeur de vecteur de mouvement, laquelle grandeur de vecteur de mouvement est incluse dans le signal de commande.

**2.** Dispositif de communication de transmission selon la revendication 1, dans lequel le processeur comprend des moyens pour calculer de l'information de couleur de pixels dans la plage de vision et en dehors de la plage d'affichage, ladite information de couleur étant incluse dans le signal de commande.

**3.** Dispositif de communication de transmission selon la revendication 1, dans lequel le processeur comprend des moyens pour réduire la résolution spatiale ou temporelle de la séquence d'images captées.

**4.** Dispositif de communication de réception comprenant :

- une unité de réception pour recevoir séparément, à partir d'un dispositif de communication de transmission à travers un réseau de communication, des données vidéo qui correspondent à une séquence d'images à afficher avec une plage d'affichage et un signal de commande étant représentatif des événements de l'environnement qui ne sont pas perceptibles dans la plage d'affichage ;
- un dispositif d'affichage pour afficher les données vidéo ;
- des sources de lumière à côté du dispositif d'affichage ; et
- un contrôleur pour interpréter le signal de commande de manière à dériver les événements de l'environnement et pour commander les sources de lumière en fonction du signal de commande.

**5.** Dispositif de communication de réception selon la revendication 4, dans lequel le contrôleur est adapté de manière à dériver de l'information de mouvement qui est représentative du mouvement d'un objet en dehors de la plage d'affichage à l'endroit du côté du dispositif de communication de transmission et une position de l'objet par rapport au dispositif d'affichage de manière à activer la source de lumière correspondante.

**6.** Dispositif de communication de réception selon la revendication 4, dans lequel le contrôleur est adapté de manière à dériver une grandeur de vecteur de mouvement qui est représentative de la quantité de mouvement d'un objet en dehors de la plage d'affichage à l'endroit du côté du dispositif de communication de transmission, une intensité de la source de lumière étant commandée en proportion de la grandeur de vecteur de mouvement.

**7.** Dispositif de communication de réception selon la revendication 4, dans lequel le contrôleur est adapté de manière à dériver de l'information de couleur qui est représentative d'une position et/ou d'un mouvement d'un objet en dehors de la plage d'affichage à l'endroit du côté du dispositif de communication de transmission, une couleur de la source de lumière étant commandée en fonction de l'information de couleur.

**8.** Dispositif de communication de réception selon la revendication 4, dans lequel le contrôleur est adapté de manière à dériver une grandeur d'un son qui est émis en dehors de la plage d'affichage à l'endroit du côté du dispositif de communication de transmission, une intensité de la source de lumière étant commandée en proportion de la grandeur du son.

**9.** Dispositif de communication de transmission selon la revendication 4, dans lequel le contrôleur est adapté de manière à dériver une direction d'un son qui est émis en dehors de la plage d'affichage à l'endroit du côté du dispositif de communication de transmission de manière à activer la source de lumière qui correspond à la direction d'où le son provient.

FIG. 1

EP 2 311 256 B1

FIG. 2

$\varphi_1$ : camera's field of view
$\varphi_2$ : digital video zoom

FIG. 3A

FIG. 3B

FIG. 4

$\varphi_2$

cam

video processing

transmit video

transmit event data

Video processing detects an event outside digital video zoom range $\varphi_2$.

## FIG. 5A

## FIG. 5B

FIG. 6

$\varphi_2$

cam

video processing

transmit video

mics

audio processing

transmit event data

Audio processing detects an event outside digital video zoom range $\varphi_2$.

door slams

## FIG. 7A

## FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6996175 B

- US 6774934 B

**Non-patent literature cited in the description**

- Rapid Object Detection using a Boosted Cascade of Simple Features. *Proc. IEEE Computer Society Conference on Computer Vision and Pattern Recognition (CVPR,* 2001, vol. I, 511-518